# EUROPÄISCHE PATENTSCHRIFT

(11) **EP 3 694 764 B1**
(45) Veröffentlichungstag und Bekanntmachung des Hinweises auf die Patenterteilung: **27.04.2022**
(21) Anmeldenummer: 18788685.8
(22) Anmeldetag: 05.10.2018
(51) Int. Cl.: B62D 1/185

(54) **VERFAHREN ZUR HERSTELLUNG VON BAUGRUPPEN MIT AXIAL VERSCHIEBBAREN BAUTEILEN**
METHOD FOR PRODUCING UNITS WITH AXIALLY MOVABLE COMPONENTS
PROCÉDÉ DE FABRICATION DE SOUS-ENSEMBLES COMPRENANT DES ÉLÉMENTS COULISSANT AXIALEMENT

(30) Priorität: 12.10.2017 DE 102017123770
(43) Veröffentlichungstag der Anmeldung: 19.08.2020
(73) Patentinhaber: thyssenkrupp Presta AG, 9492 Eschen (LI); thyssenkrupp AG, 45143 Essen (DE)
(72) Erfinder: HIRSCHAUER, Peter, 6805 Feldkirch (AT)
(74) Vertreter: thyssenkrupp Intellectual Property GmbH
(86) Internationale Anmeldenummer: PCT/EP2018/077099
(87) Internationale Veröffentlichungsnummer: WO 2019/072702

(56) Entgegenhaltungen:
- WO-A1-2017/032566
- DE-A1-102008 005 256

## Beschreibung

Die vorliegende Erfindung betrifft ein Verfahren mit den Merkmalen des Anspruchs 1 und eine Kraftfahrzeuglenkung mit den Merkmalen des Anspruchs 8. Schiebeverbindungen für zueinander verschiebbare Bauteile, insbesondere Rohrteile, wie z. B. koaxiale, zueinander teleskopierbare Rohre, die ineinander eingesetzt und teleskopierbar sind, kommen in verschiedenen Gebieten der Technik zum Einsatz. Die Schiebeverbindung soll im Allgemeinen reibungsarm, spielfrei und mechanisch belastbar sein. Insbesondere bei Kraftfahrzeuglenkungen kommen solche teleskopierbaren Verbindungen an verschiedenen Stellen vor. Es gibt zum einen in der Lenksäule selbst eine teleskopierbare Kombination aus einem inneren und einem äußeren Mantelrohr, die eine Lenkwelle umgeben und die für die Axialverstellung der Lenksäule teleskopierbar ausgeführt sind. Häufig ist eine Kunststoffhülse zwischen den beiden aus Metall gefertigten, zueinander verschiebbaren Bauelementen eingesetzt. Problematisch und aufwändig ist dabei bei der Fertigung dieser Verbindungen, dass das Kunststoffteil nicht unmittelbar als Bauteil eingesetzt werden kann und ohne weitere Bearbeitungsschritte die Anforderungen an Spielfreiheit und eine definierte Reibung bei der axialen Verschiebebewegung erfüllen kann.

In der DE 10 2004 051 670 A1 wird eine Methode zur Herstellung einer Gleitverbindung einer Lenksäulenanordnung vorgestellt, bei der zwischen einem äußeren Mantelrohr und einem inneren Mantelrohr eine Hülse vorgesehen ist, die eine spezielle Ausgestaltung von Rippen aufweist. Zur Darstellung einer guten Verschiebbarkeit muss hier ein enges Toleranzfeld eingehalten werden, was hohe Kosten verursacht.

In der DE 10 2008 005 256 B4 wird eine Gleitverbindung einer Lenksäule vorgestellt, bei der zwischen einem inneren Rohr und einem äußeren Rohr eine Hülse vorgesehen ist, die an lokalen Stellen mittels Wärmeeinbringung mit Kontaktflächen versehen wird, um eine spielfreie Gleitverbindung darzustellen. Diese Methode ist aufwändig.

Aus der WO 2017/032566 A1 ist ein gattungsgemäßes Verfahren zur Herstellung einer axial verschieblichen Verbindung zwischen zwei Rohrteilen mit den Merkmalen Bereitstellen der beiden zu fügenden Rohrteile, wobei eine Kunststoffhülse zwischen den Rohrteilen vorgesehen ist; Zusammenfügen der Rohrteile zu einer Baugruppe einschließlich der Kunststoffhülse; Anpressen einer Sonotrode von einer Seite an das jeweils äußere Bauteil und Abstützen des Bauteils an einem Gegenhalter; Einleiten eines Ultraschallsignals in die Sonotrode; und Beenden des Ultraschallsignals bekannt.

Es ist deshalb Aufgabe der vorliegenden Erfindung, ein Verfahren bereitzustellen, mit dem die Prozesszeit verkürzt werden kann, ein geringerer Energieaufwand erforderlich ist und ein besseres Ergebnis erzielt werden kann. Diese Aufgabe wird von einem Verfahren mit den Merkmalen des Anspruchs 1 gelöst. Es ist weiter Aufgabe der vorliegenden Erfindung, eine Vorrichtung mit zueinander verschiebbaren Bauteilen zu schaffen, bei der eine bessere Spielfreiheit und eine genauere Einhaltung vorgegebener Reibungskräfte bzw. Verschiebungskräfte gegeben sind. Diese Aufgabe wird von einer Vorrichtung mit den Merkmalen des Anspruchs 8 gelöst.

Die Aufgabe wird im Einzelnen gelöst, weil bei dem Verfahren zur Herstellung einer axial verschieblichen Verbindung zwischen zwei Rohrteilen, zwischen denen ein Kunststoff als Gleitmaterial angeordnet ist, folgende Merkmale vorgesehen sind:
a) Bereitstellen der beiden zu fügenden Rohrteile, wobei entweder wenigstens eines der beiden Rohrteile eine Kunststoffbeschichtung auf der dem anderen Rohrteil zugewandten Oberfläche aufweist oder eine Kunststoffhülse zwischen den Rohrteilen vorgesehen ist,
b) Zusammenfügen der Rohrteile zu einer Baugruppe, gegebenenfalls mit der Kunststoffhülse, mittels einer Presskraft in Axialrichtung,
c) Einspannen der Baugruppe in eine Vorrichtung, bei der die beiden Rohrteile gespannt und in Axialrichtung mit einer Verschiebkraft beaufschlagt werden können,
d) Anpressen einer Sonotrode von einer Seite an das jeweils äußere Rohrteil und Abstützen des Rohrteils an einem Gegenhalter,
e) Einleiten eines Ultraschallsignals mit einer Frequenz, die in der Nähe der Resonanzfrequenz eines der Rohrteile der Baugruppe liegt, in die Sonotrode und Verschieben der Rohrteile in Axialrichtung hin und her, bis die Verschiebkraft oder die Verschiebegeschwindigkeit einen gewünschten Sollwert erreicht,
f) Beenden des Ultraschallsignals und Entnehmen der Baugruppe aus der Vorrichtung.

Dadurch wird eine schnellere und im Ergebnis präzisere Kalibrierung der Kunststoffhülse bzw. der Gleithülse bzw. der Kunststoffbeschichtung im Verschiebebereich der Bauteile möglich.

Als Bauteile der Baugruppe sind insbesondere das äussere Rohrteil oder das innere Rohrteil oder die Kunststoffhülse, falls sie als separates Bauteil vorhanden ist, zu sehen.

Die Aufgabe einer solchen axial verschieblichen Verbindung zwischen zwei Bauteilen, insbesondere zwei zylindrischen Rohrteilen, besteht darin, eine Verschiebbarkeit mit möglichst geringer Verschiebekraft bei gleichzeitig geringem Spiel zwischen den Bauteilen darzustellen. Bei der Auslegung einer solchen Verbindung wird eine maximal zulässige Kraft, die zur Darstellung einer Verschiebung der beiden Bauteile gegeneinander erforderlich ist, festgelegt. Diese Kraft stellt dann den Sollwert für die gewünschte Verschiebekraft dar. Es kann auch vorgesehen sein, den Sollwert für die gewünschte Verschiebekraft auf einen Wert festzulegen, der 5%, bevorzugt 10%, unterhalb dem bei der Auslegung festgelegten maximal zulässigen Wert für die Verschiebekraft entspricht.

Der gewünschte Sollwert für die Verschiebegeschwindigkeit wird bestimmt, indem für eine vorgegebene Verschiebekraft, die oberhalb der maximal zulässigen Verschiebekraft liegt, in Versuchen ermittelt wird, bei welcher Geschwindigkeit der gewünschte Sollwert für die Verschiebekraft erreicht wird. Der Sollwert für die Geschwindindigkeit wird dann entsprechend festgelegt. Mit Vorteil kann ein Aufschlag auf den Sollwert von 5%, und mehr bevorzugt von 10%, vorgesehen sein.

Bevorzugt wird bei dem Verfahren ein Ultraschallsignals mit einer Frequenz im Bereich von 20kHz bis 35kHz in die Sonotrode eingeleitet, wobei hier eine Frequenz, die möglichst nahe einer Resonanzfrequenz eines der Bauteile, des inneren Rohres oder des äußeren Rohres oder, falls vorhanden der Kunststoffhülse, liegt. In diesem Sinne ist die Begrifflichkeit "in der Nähe der Resonanzfrequenz" zu verstehen. In dieser Begrifflichkeit sollen Abweichungen von +/-20% von der Resonanzfrequenz umfasst sein. Bevorzugt ist der Abstand der eingesetzen Frequenz zu einer der Resonanzfrequenzen geringer als +/- 15%. Mehr zu bevorzugen sind Werte die dichter als +/-10% Abstand zu einer der Resonanzfrequenzen aufweisen.

Dann ist der Energieübertrag von der Sonotrode auf den Kunststoff besonders effektiv.

Es kann vorgesehen sein, dass die Resonanzfrequenz vor dem Schritt a) in einer Simulation ermittelt wird, so dass diese Frequenz vorab als Parameter für die Ansteuerung der Sonotrode gespeichert werden kann.

Dabei kann es von Vorteil sein, wenn die Frequenz des in die Sonotrode eingeleiteten Ultraschallsignals während des Prozessablaufs des Verfahrens variiert wird.

Vorzugsweise sind die Bauteile ein inneres Mantelrohr und ein äußeres Mantelrohr einer axial teleskopierbaren Kraftfahrzeuglenkung.

Wenn im Schritt d) zwei Sonotroden an das äußere Bauteil angepresst werden, ist eine intensivere oder anders parametrierte Energieeinleitung möglich. Insbesondere können die beiden Sonotroden mit Ultraschallsignalen verschiedener Frequenzen beaufschlagt werden.

Darüberhinaus hat es sich gezeigt, dass auch mit Vorteil mehr als zwei Sonotroden eingesetzt werden können, um die Energieeinleitung noch weiter zu erhöhen. Dabei kann an jeder Sonotrode eine andere Frequenz oder ein anderer Frequenzverlauf über der Prozesszeit angewendet werden. Dabei sind jedoch Resonanzfrequenzen des inneren Mantelrohrs und/oder des äußeren Mantelrohrs bevorzugt anzusteuern. Der Frequenzverlauf kann entsprechend in Frequenzsprüngen oder -stufen erfolgen.

Auch die Ultraschallleistung kann für jede Sonotrode separat festgelegt sein. Auch dabei können Verläufe vorgesehen sein. So kann für eine kurze Anfangszeit von bis zu 3s eine hohe Leistung und dann für die übrige Prozesszeit eine niedrige Leistung vorgesehen sein. Dabei ist die niedrige Leistung mit Vorteil um 1/3 niedriger als die hohe Leistung.

Zur Darstellung des Verfahrens zur Herstellung der axial verschieblichen Verbindung kann die Verschiebung der beiden Bauteile gegeneinander mit einem Pneumatikzylinder bewirkt werden. Durch den eingeleiteten Druck kann gut eine kraftgesteuerte Bewegung der eingespannten Baugruppe erfolgen. Dabei kann die Kraft auch für unterschiedliche Geschwindigkeiten der Bewegung gut eingestellt werden und die Verschiebegeschwindigkeit gemessen werden.

Bei Kraftfahrzeuglenkung mit einer telekopierbaren Mantelrohreinheit, die nach einem oben beschriebenen Verfahren hergestellt ist, ergeben sich in der Fertigung kürzere mögliche Taktzeiten und ein geringerer Energieaufwand. Außerdem ist im Ergebnis die Kraftfahrzeuglenkung mit besseren Eigenschaften hinsichtlich Dauerhaltbarkeit, Spielfreiheit und Geräuschfreiheit versehen.

Nachfolgend werden Ausführungsbeispiele der Erfindung anhand der Zeichnung beschrieben. Es zeigen:
- Figur 1:: eine schematisch dargestellte Kraftfahrzeuglenkung;
- Figur 2:: eine Mantelrohreinheit;
- Figur 3 - 4:: das Mantelrohr in perspektivischer Darstellung;
- Figur 5:: das Mantelrohr aus Fig. 2 - 4 in einem Querschnitt;

- Figur 6:: das Mantelrohr aus Fig. 2 - 5 während der Kalibrierung der Kunststoffhülse;
- Figur 7:: das Mantelrohr aus Fig. 2 - 5 während der Kalibrierung der Kunststoffhülse; sowie
- Figur 8:: das Mantelrohr aus Fig. 7 während der Kalibrierung der Kunststoffhülse in einem Längsschnitt.

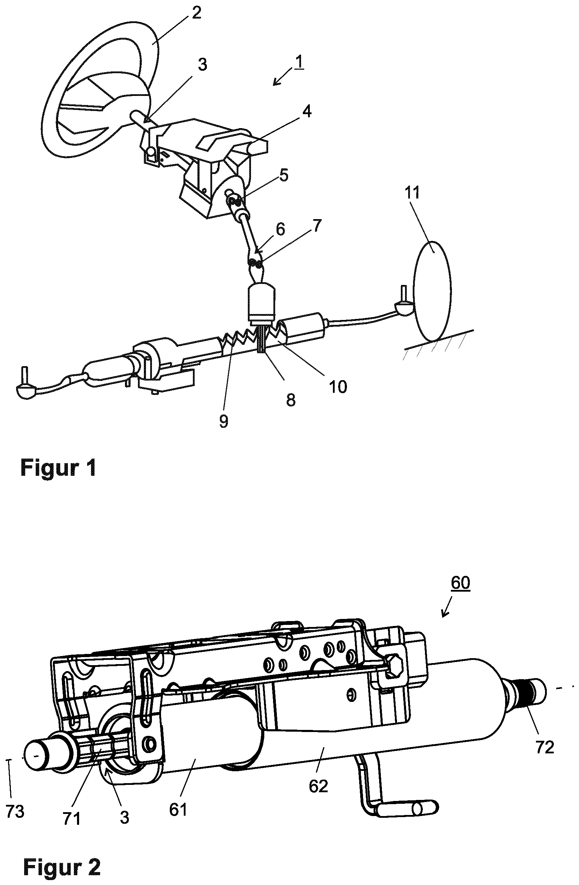

Die Figur 1 zeigt in einer schematischen Darstellung eine Kraftfahrzeuglenkung 1 mit einem Lenkrad 2, das drehfest mit einer oberen Lenkwelle 3 verbunden ist. Die obere Lenkwelle 3 ist in einer Konsole 4 höhenverstellbar und axialverstellbar gelagert. Über ein Kardangelenk 5 ist die obere Lenkwelle 3 schwenkbar, aber drehfest mit einer unteren Lenkwelle 6 verbunden. Die untere Lenkwelle 6 ist schließlich über ein zweites Kardangelenk 7 mit einem Ritzel 8 verbunden, das in ein Zahnstangensegment 9 einer Zahnstange 10 eingreift.

Eine Drehbewegung des Lenkrads 2 führt somit zu einer Verschiebung der Zahnstange 10 und in bekannter Weise zu einer Verschwenkung von gelenkten Rädern 11 des Kraftfahrzeugs, wodurch eine Lenkbewegung und Fahrtrichtungsänderung bewirkt wird.

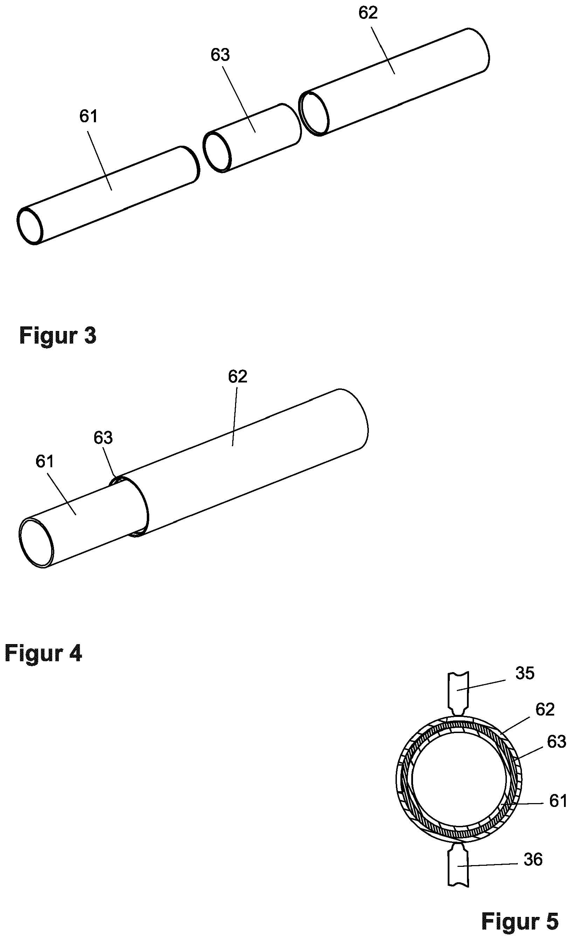

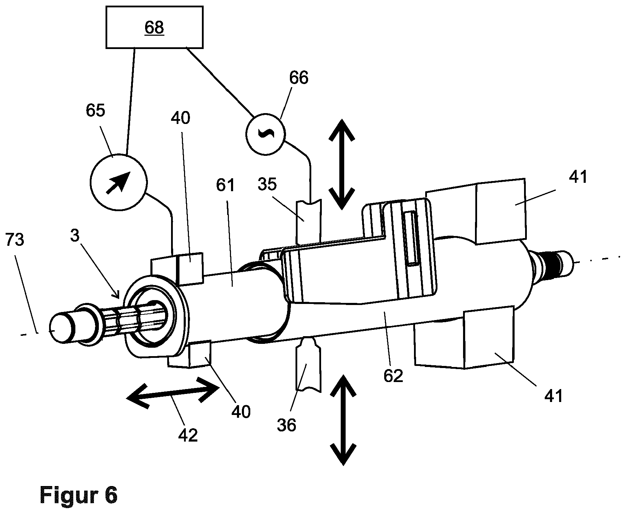

In den Figuren 2 bis 5 ist ein Beispiel für eine teleskopierbare Mantelrohreinheit 60 dargestellt. Die teleskopierbare Mantelrohreinheit 60 weist die obere Lenkwelle 3 auf, die oben zu Figur 1 beschrieben wurde. Die obere Lenkwelle 3 ist drehbar um ihre Längsachse 73 in einem inneren Mantelrohr 61 und einem äußeren Mantelrohr 62 gelagert. Zur Axialverstellung der Lenksäule ist das innere Mantelrohr 61 gegenüber dem äußeren Mantelrohr 62 in Axialrichtung, die der Längsrichtung der Längsachse 73 entspricht, verschiebbar ausgebildet. Zwischen dem inneren Mantelrohr 61 und dem äußeren Mantelrohr 62 ist eine Gleithülse 63 vorgesehen, die in Figur 3 separat dargestellt ist. Die Gleithülse 63 sitzt zwischen dem inneren Mantelrohr 61 und dem äußeren Mantelrohr 62, wie dies in Figuren 4 und 5 erkennbar ist. Es handelt sich bei dem inneren Mantelrohr 61 und dem äußeren Mantelrohr 62 im technischen Sinne nicht um Wellen, zumal diese im dargestellten Beispiel einen kreisrunden Querschnitt aufweisen und keine Drehmomente übertragen können. Es ist dennoch vorteilhaft, wenn der Sitz der beiden Mantelrohrteile im Bereich der Gleithülse 63 spielfrei und dennoch leichtgängig ist. Zu diesem Zweck wird das erfindungsgemäße Verfahren zur Kalibrierung der Gleithülse 63 zwischen dem inneren Mantelrohr 61 und dem äußeren Mantelrohr 62 angewendet. Dies ist in den Figuren 5 und 6 veranschaulicht. Die Sonotrode 35 wird außen auf das äußere Mantelrohr 62 aufgesetzt, welches sich auf dem gegenüber platzierten Amboss 36 abstützt. Sodann wird die Sonotrode 35 von einer Steuerung 66 mit elektrischer Spannung einer bestimmten Frequenz oder einem Frequenzverlauf angesteuert, die einer Resonanzfrequenz des äußeren Mantelrohrs 62 entspricht. Die Schwingungsenergie führt wiederum zu einer Erwärmung der Gleithülse 63.

In der Figur 6 ist veranschaulicht, dass während des Vorgangs das innere Mantelrohr 61 zwischen Spannbacken 40 eingespannt ist, während das äußere Mantelrohr 62 zwischen Spannbacken 41 eingespannt ist. Während die Gleithülse 63 erwärmt wird, wird das innere Mantelrohr 61 in Richtung des Doppelpfeils 42 hin- und herbewegt. Die dafür erforderliche Verschiebekraft F wird mit einem Kraftaufnehmer 65 erfasst. Die Verschiebekraft F sinkt mit der Anzahl der Hubbewegungen in Richtung des Doppelpfeils 42. Sobald ein bestimmter Schwellwert erreicht oder unterschritten wird, ist die Kalibrierung der Gleithülse 63 abgeschlossen. Die Steuerung des Prozesses erfolgt über eine Steuerungs- und Auswerteeinheit 68. Die so bearbeitete Mantelrohreinheit 60 wird dann aus den Spannzangen 40 und 41 genommen, der Amboss 36 und die Sonotrode 35 werden entfernt, und das Mantelrohr kann in eine Konsole 4 entsprechend Figur 1 eingebaut werden.

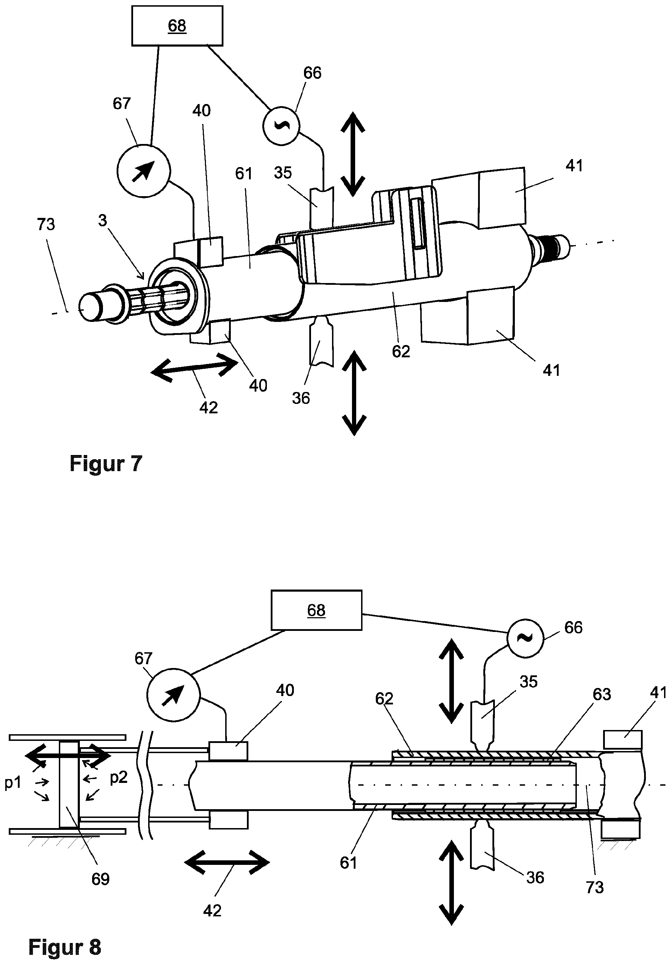

In den Figuren 7 und 8 ist eine alternative Prozessführung veranschaulicht. Alternativ oder in Kombination zum Einsatz eines Kraftaufnehmers 65 kann ein Geschwindigkeitsaufnehmer 67 vorgesehen sein, der auch als Wegaufnehmer ausgebildet sein kann, wobei die Geschwindigkeit in einer Steuerungs- und Auswerteeinrichtung 68 bestimmt wird. In der Figur 8 ist der Kalibriervorgang in einem Längsschnitt veranschaulicht. Die Sonotrode 35 und der Amboss 36 sind jeweils an die Oberfläche des äusseren Mantelrohrs 62 angesetzt. Das innere Mantelrohr 61 ist in die Kunststoffhülse 63 und das äußere Mantelrohr 62 eingesetzt. Beide Mantelrohre werden nun von Spannzangen 40 und 41 erfasst. Die Spannzange 41 wird stationär gehalten, während die Spannzange 40 durch einen Kolben 69 eines Pneumatikzylinder mit einer Bewegung beaufschlagt werden kann. Eine Steuerungs- und Auswerteeinheit 68 übernimmt die Prozessführung. Die Sonotrode 35 wird von einer Steuerung 66 angesteuert, um eine Ultraschallschwingung auf das äußere Mantelrohr 62 zu übertragen. Das äußere Mantelrohr 62 wird dadurch in eine mechanische Schwingung versetzt. Da das äußere Mantelrohr 62 selbst relativ frei schwingt, wird die Schwingungsenergie zu einem großen Teil auf die Kunststoffhülse 63 übertragen, die dadurch mit hoher Frequenz verformt wird. Die Kunststoffhülse 63 erwärmt sich dabei. Gleichzeitig wird durch eine Relativbewegung in Richtung des Doppelpfeils 42 mittels der Spannzangen 40 und 41 das innere Mantelrohr 61 in Axialrichtung hin- und herbewegt. Dazu werden die Drücke p1 und p2 abwechselnd erhöht und abgesenkt, so dass der Kolben 69 hin und her bewegt wird. Der Kolben 69 ist entsprechend mechanisch mit der Spannzahnge 40 gekoppelt. Die erwärmte Kunststoffhülse 63 passt sich dabei den beiden einander zugewandten Oberflächen des inneren Mantelrohrs 61 und des äußeren Mantelrohrs 62 an. Der Anpassungsvorgang kann dadurch kontrolliert werden, dass die Geschwindigkeit, mit der die Spannzange 40 bewegt wird mit einem Wegsensor oder einem Geschwindigkeitssensor 67 erfasst wird. Vorzugsweise wird die Erhitzung der Kunststoffhülse 30 mittels Ultraschall ebenso wie die Bewegung in Richtung des Doppelpfeils 42 so lange ausgeführt, bis der Maximalwert der Verschiebegeschwindigkeit einen vorgesehenen minimalen Sollwert überschreitet. Der Anpassungsvorgang ist dann abgeschlossen.

Nach Abschalten der Anregung der Sonotrode 35 kühlt sich die Kunststoffhülse 63 schnell ab, da die beiden Mantelrohrteile 61 und 62 durch die Ultraschallanregung im Wesentlichen nicht selbst erwärmt wurden und somit gegenüber der Kunststoffhülse 63 kalt sind. Dies fördert die Maßhaltigkeit der so kalibrierten Kunststoffhülse 63. Hinzu kommt, dass das äußere Mantelrohr 62 und das innere Mantelrohrteil 61 bei diesem Vorgang praktisch keine thermischen Änderungen ihrer Abmessungen erfahren. Dadurch wird die erzielbare Präzision des Kalibriervorgangs der Kunststoffhülse 63 verbessert.

Die Aufwärm- und Abkühlzeiten des beschriebenen Vorgangs sind auf Grund der geringen zu erwärmenden Masse der Kunststoffhülse 63 kurz, so dass eine kurze Taktzeit erzielbar ist. Weiters genügt es, die Kunststoffhülse nur an der Oberfläche soweit zu erwärmen, dass sie sich gut einformen kann. Der Ablauf der oben beschriebenen Vorgänge sieht also als Ausführungsbeispiel folgende teilweise optionale Prozessschritte vor:
- Bereitstellung der beiden zu fügenden Rohrteile, wobei
- entweder wenigstens eines der beiden Rohrteile eine Kunststoffbeschichtung auf der dem anderen Wellenteil zugewandten Oberfläche aufweist,
- oder eine Kunststoffhülse zur Anlage zwischen den Rohrteilen vorgesehen ist,
- Zusammenfügen der Rohrteile, gegebenenfalls mit der Kunststoffhülse dazwischen,
- wobei die Rohrteile und gegebenenfalls die Kunststoffhülse so ausgebildet sind, dass das Zusammenfügen nur unter Überwindung einer Presskraft erfolgen kann, da der Schiebesitz mit einem Übermaß ausgebildet ist,
- Einspannen der Baugruppe in eine Vorrichtung, bei der die beiden Rohrteile gespannt und in Axialrichtung mit einer Verschiebkraft beaufschlagt werden können. Die Vorrichtung ist vorzugsweise so ausgerüstet, dass eine Verschiebekraft gemessen werden kann.
- Anpressen einer Sonotrode von einer Seite an das jeweils äußere Wellenteil und Abstützen des Innenteils an einem Gegenhalter (Amboss),
- Einleiten eines Ultraschallsignals in die Sonotrode und Verschieben der Rohrteile in Axialrichtung hin und her, bis die Verschiebkraft einen gewünschten Sollwert erreicht. Alternativ kann das Verfahren so ausgeführt werden, dass mit einer konstanten Kraft die Rohrteile gegeneinander verschoben werden und die Verschiebegeschwindigkeit gemessen wird. Dann wird der Vorgang beendet, wenn eine bestimmte Verschiebegeschwindigkeit erreicht wird.
- Nach Beendigung des Vorgangs wird die Welle als fertiges Bauteil aus der Vorrichtung entnommen und weiter verbaut.

## Patentansprüche

1. Verfahren zur Herstellung einer axial verschieblichen Verbindung zwischen zwei Rohrteilen (61, 62), zwischen denen ein Kunststoff als Gleitmaterial angeordnet ist, mit folgenden Merkmalen:
a) Bereitstellen der beiden zu fügenden Rohrteile (61, 62), wobei entweder wenigstens eines der beiden Rohrteile (61, 62) eine Kunststoffbeschichtung auf der dem anderen Rohrteil (62, 61) zugewandten Oberfläche aufweist oder eine Kunststoffhülse (63) zwischen den Rohrteilen (61, 62) vorgesehen ist,
b) Zusammenfügen der Rohrteile (61, 62) zu einer Baugruppe, gegebenenfalls mit der Kunststoffhülse (63), mittels einer Presskraft in Axialrichtung
c) Einspannen der Baugruppe in eine Vorrichtung (40, 41), bei der die beiden Rohrteile (61, 62) gespannt und in Axialrichtung mit einer Verschiebkraft beaufschlagt werden können,
d) Anpressen einer Sonotrode (35) von einer Seite an das jeweils äußere Rohrteil (62) und Abstützen des Rohrteils (62) an einem Gegenhalter,
e) Einleiten eines Ultraschallsignals in die Sonotrode (35) mit einer Frequenz, die in der Nähe der Resonanzfrequenz eines der Rohrteile (61, 62) der Baugruppe liegt, und Verschieben der Rohrteile (61, 62) in Axialrichtung hin und her, bis die Verschiebkraft oder die Verschiebegeschwindigkeit einen gewünschten Sollwert erreicht,
f) Beenden des Ultraschallsignals und Entnehmen der Baugruppe aus der Vorrichtung (40, 41).

2. Verfahren nach einem der vorhergehenden Ansprüche, **dadurch gekennzeichnet, dass** die Frequenz des in die Sonotrode (35) eingeleiteten Ultraschallsignals im Bereich von 20 bis 35kHz liegt.

3. Verfahren nach einem der vorhergehenden Ansprüche, **dadurch gekennzeichnet, dass** die Frequenz des in die Sonotrode (35) eingeleiteten Ultraschallsignals während des Prozessablaufs des Verfahrens variiert wird.

4. Verfahren nach einem der vorhergehenden Ansprüche, **dadurch gekennzeichnet, dass** die Resonanzfrequenz vor dem Schritt a) in einer Simulation ermittelt wird.

5. Verfahren nach einem der vorhergehenden Ansprüche, **dadurch gekennzeichnet, dass** die Rohrteile (61, 62) ein inneres Mantelrohr (61) und ein äußeres Mantelrohr (62) einer axial teleskopierbaren Kraftfahrzeuglenkung (1) sind.

6. Verfahren nach einem der vorhergehenden Ansprüche, **dadurch gekennzeichnet, dass** im Schritt d) zwei Sonotroden (35) an das äußere Rohrteil (62) angepresst werden.

7. Verfahren nach Anspruch 6, **dadurch gekennzeichnet, dass** die beiden Sonotroden (35) mit Ultraschallsignalen verschiedener Frequenzen beaufschlagt werden.

8. Kraftfahrzeuglenkung (1) mit einer telekopierbaren Mantelrohreinheit (60), die nach einem Verfahren mit den Merkmalen der vorhergehenden Ansprüche hergestellt ist.

## Claims

1. A method for producing an axially movable connection between two tubular components (61, 62), between which a plastic is arranged as a sliding material, having the following features:
a) providing the two tubular components (61, 62) to be joined, wherein either at least one of the two tubular components (61, 62) has a plastic coating on the surface facing toward the other tubular component (61, 62) or a plastic sleeve (63) is provided between the tubular components (61, 62),
b) joining the tubular components (61, 62) to form a unit, optionally with the plastic sleeve (63), by means of a pressing force in the axial direction
c) clamping the unit in a device (40, 41) in which the two tubular components (61, 62) can be clamped and subjected to a displacement force in the axial direction,
d) pressing a sonotrode (35) from one side against the respectively outer tubular component (62) and bracing the tubular component (62) against a counter-holder,
e) injecting an ultrasound signal into the sonotrode (35) at a frequency close to the resonance frequency of one of the tubular components (61, 62) of the unit, and moving the tubular components (61, 62) back and forth in the axial direction until the displacement force or the displacement velocity reaches a desired target value,
f) ending the ultrasound signal and removing the unit from the device (40, 41).

2. The method as claimed in one of the preceding claims, **characterized in that** the frequency of the ultrasound signal injected into the sonotrode (35) lies in the range of 20 to 35 kHz.

3. The method as claimed in one of the preceding claims, **characterized in that** the frequency of the ultrasound signal injected into the sonotrode (35) is varied during the course of the process.

4. The method as claimed in one of the preceding claims, **characterized in that** the resonance frequency is determined in a simulation prior to step a).

5. The method as claimed in one of the preceding claims, **characterized in that** the tubular components (61, 62) are an inner casing tube (61) and an outer casing tube (62) of an axially telescopic motor vehicle steering system (1).

6. The method as claimed in one of the preceding claims, **characterized in that** two sonotrodes (35) are pressed against the outer tubular component (62) in step d).

7. The method as claimed in claim 6, **characterized in that** the two sonotrodes (35) are injected with ultrasound signals of different frequencies.

8. A motor vehicle steering system (1) having a telescopic casing tube unit (60) which is produced by a method having the features of the preceding claims.

## Revendications

1. Procédé de réalisation d'une liaison coulissante axialement entre deux parties de tube (61, 62) entre lesquelles une matière plastique est disposée comme matériau de glissement, ledit procédé comprenant les caractéristiques suivantes :
a) fournir les deux parties de tube (61, 62) à assembler, l'une au moins des deux parties de tube (61, 62) comportant un revêtement en matière synthétique sur la surface dirigée vers l'autre partie de tube (62, 61) ou bien un manchon (63) en matière synthétique étant prévu entre les parties de tube (61, 62),
b) assembler les parties de tube (61, 62) pour former un ensemble, muni éventuellement du manchon (63) en matière synthétique, au moyen d'une force de pression exercée dans la direction axiale,
c) serrer l'ensemble dans un dispositif (40, 41) dans lequel les deux parties de tube (61, 62) peuvent être serrées et soumises à une force de coulissement dans la direction axiale,
d) presser une sonotrode (35) d'un côté sur la partie de tube extérieure respective (62) et mettre la partie de tube (62) en appui sur un contre-support,
e) injecter un signal ultrasonore dans la sonotrode (35) à une fréquence proche de la fréquence de résonance de l'une des parties de tube (61, 62) de l'ensemble, et faire coulisser les parties de tube (61, 62) suivant un mouvement alternatif dans la direction axiale jusqu'à ce que la force de coulissement ou la vitesse de coulissement atteigne une valeur cible souhaitée,
f) mettre fin au signal ultrasonore et retirer l'ensemble du dispositif (40, 41).

2. Procédé selon l'une des revendications précédentes, **caractérisé en ce que** la fréquence du signal ultrasonore injecté dans la sonotrode (35) est comprise entre 20 et 35 kHz.

3. Procédé selon l'une des revendications précédentes, **caractérisé en ce que** l'on fait varier la fréquence du signal ultrasonore injecté dans la sonotrode (35) au cours du procédé.

4. Procédé selon l'une des revendications précédentes, **caractérisé en ce que** la fréquence de résonance est déterminée avant l'étape a) dans une simulation.

5. Procédé selon l'une des revendications précédentes, **caractérisé en ce que** les parties de tube (61, 62) sont un tube d'enveloppe intérieur (61) et un tube d'enveloppe extérieur (62) d'une direction de véhicule automobile (1) axialement télescopique.

6. Procédé selon l'une des revendications précédentes, **caractérisé en ce que**, à l'étape d), deux sonotrodes (35) sont pressées sur la partie de tube extérieure (62).

7. Procédé selon la revendication 6, **caractérisé en ce que** les deux sonotrodes (35) sont soumises à des signaux ultrasonores de fréquences différentes.

8. Direction de véhicule automobile (1) comprenant une unité de tube d'enveloppe télescopique (60) qui est réalisée selon un procédé présentant les caractéristiques des revendications précédentes.
